# EUROPEAN PATENT SPECIFICATION

(11) **EP 1 410 259 B1**
(45) Date of publication and mention of the grant of the patent: **31.05.2006**
(21) Application number: 02747386.7
(22) Date of filing: 13.06.2002
(51) Int. Cl.: G06F 17/30

(54) **CAPTURING DATA ATTRIBUTE OF PREDEFINED TYPE FROM USER**
ERFASSUNG VON DATENATTRIBUTEN EINES VORDEFINIERTEN TYPS VOM BENUTZER
CAPTURE D'ATTRIBUT DE DONNEES DE TYPE DEFINI PROVENANT D'UN UTILISATEUR

(30) Priority: 16.07.2001 US 305809 P
(43) Date of publication of application: 21.04.2004
(73) Proprietor: SAP AG, 69190 Walldorf (DE)
(72) Inventor: HAMMERICH, Reiner, 76669 Bad Schönborn (DE); FILDEBRANDT, Ulf, 68723 Schwetzingen (DE)
(74) Representative: Schiuma, Daniele Wolfgang
(86) International application number: PCT/EP2002/006519
(87) International publication number: WO 2003/009171

(56) References cited:
- EP-A- 0 499 404
- WO-A-00/34860
- WO-A-98/44695
- US-A- 6 167 523
- BRYAN Y: "CREATING HTML FORMS" SGML AND HTML EXPLAINED, XX, XX, January 1997 (1997-01), pages 209-220, XP000853514

## Description

### Field of the Invention

The present invention generally relates to client/server computer systems, and, more particularly, relates to a computer system in that the client has a browser to input data for processing by the server computer.

### Background of the Invention

In internet computer systems, client computer and server computer communicate via predefined network protocols, such as HTTP und TCP/IP. Generally, a user operates the client computer and inputs data attributes; client computer and network forward the data attributes to the server computer; and the server computer processes the data attributes by an application.
Usually, for processing, the server computer uses further computers, such as database computers.

More in detail, a large number of client computers communicates with a single server computer; each client computer is equipped with a browser. Standard browsers are commercially available (e.g., Microsoft Explorer, Netscape Navigator). For each particular application, the server computer instructs the browser by a page in a markup language (i.e. coding). For example, a HTML-page causes the browser to display an input mask that prompts the user to input the data attribute.

Modern programmers refrain from adapting the software on the client computer to the application on the server computer. In other words, it is desired to leave the browser unchanged but to put all intelligence to the server computer application.

Often, the input mask provides representations of the data attributes in a single format (e.g., string). However, the application processes the data attributes in a variety of formats (e.g., strings and integer). For example, the application conveniently uses positive integers to process the age of a person and uses strings for names. Hence, there is a need for data conversion.

As with all human-to-computer interaction, human errors can not be excluded; checking the data attributes is therefore mandatory. Taking the foregoing discussion into account, checking is desirable performed by the server computer.

In practice, the input mask invites the user to input a large number of data attributes such as name, address, age, or other content. The error probability rises with the number of data attributes.

Checking data ranges according to predefined rules is required as well. For example, the application uses the attribute "age-of-a-person" as an integer number between 0 and 130. In other words, there are input constraints, and the rules correspond to these constraints.

Checking data consistency between different data attributes is required as well. Predefined rules exist, for example, for checking the consistence between phone dialing codes and city. The code "0621" belongs to the cities Mannheim and Ludwigshafen in Germany, but not to the city of Heidelberg.

The requirement for checking and converting has further challenges: Some formats (e.g., integer) do not have appropriate values for indicating invalidity of data. To stay with "age-of-a-person", an application might assign a "9999" value to an integer to indicate non-validity (or to indicate non-availability). However, during processing, this approach might cause errors, especially when further processing is not coordinated with checking. The first "age" 9999 is correctly compared to a second "age" integer "36", but the processing result is not valid for interpretation: a correct result ("first person" older than "second person") can not be given.

In case of input error, the user is invited to enter the attribute again; however, this is often accompanied by an unwanted loss of correct items. For example, the user has typed a number of data attributes, one attribute needs correction, but the server computer instructs the browser to return an empty mask. WO 00/34860 discloses how to automatically map data from input fields to software components in order to convert the data to a correct type, but does not contemplate the fact that the server may not be able to store the data.

There is an ongoing need to provide an improved computer system, method and computer.

### Summary of the Invention

The present invention relates to method, system and computer program product for capturing a data attribute of a predefined type from a user of a client computer to an application on a server computer. The method comprises the following steps: sending a markup language page by a view in the server computer to a browser in the client computer for displaying an input mask; interpreting the page by the browser to receive the data attribute from the user, the attribute being in a transfer format; transferring the data attribute to an object on the server computer, the object having a type that corresponds to the type of the data attribute; storing the data attribute by the object in transfer format; converting the data attribute from the transfer format to a process format by the object; checking the compliance of the data attribute with a predefined rule by the object, and forwarding the data attribute in the process format by the object to the application.

Preferably, the transfer format is a string format. Preferably, in the checking step, the predefined rule is internal to the object. Preferably, in the checking step, the predefined rule is external to the object.
Preferably, further steps are: storing state information in permanent memory and restoring the object by using the state information. Preferably, restoring is delayed until transferring. Preferably, storing state information in permanent memory is performed by storing in hidden input fields in the page.

### Brief Description of the Drawings

- FIG. 1: illustrates a block diagram of a computer network system having a plurality of computers;
- FIG. 2: illustrates a simplified block diagram of a computer network system with a client computer and a server computer for implementing a first embodiment;
- FIG. 3: illustrates a simplified flow chart diagram of a method of the present invention according to the first embodiment;
- FIG. 4: illustrates a simplified block diagram of the computer network system of FIG. 2 with more detail;
- FIG. 5: illustrates a simplified code listing of a JSP-page;
- FIG. 6: illustrates a simplified code listing of an HTML-page;
- FIGS. 7-8: illustrate a simplified action overview for the first embodiment with application, object, controller, view and browser;
- FIG. 9: illustrates a simplified block diagram of the server computer for implementing a second embodiment of the present invention with a first memory portion that is temporarily unavailable and a second memory portion that is permanently available;
- FIG. 10: illustrates a simplified diagram of an object, a rule, and an application according to a third embodiment; and
- FIG. 11: illustrates a simplified diagram of first and second data attributes with first and second objects, respectively, in a fourth embodiment.

### Detailed Description of the Invention

For convenience, a list of references is provided prior to the claims.

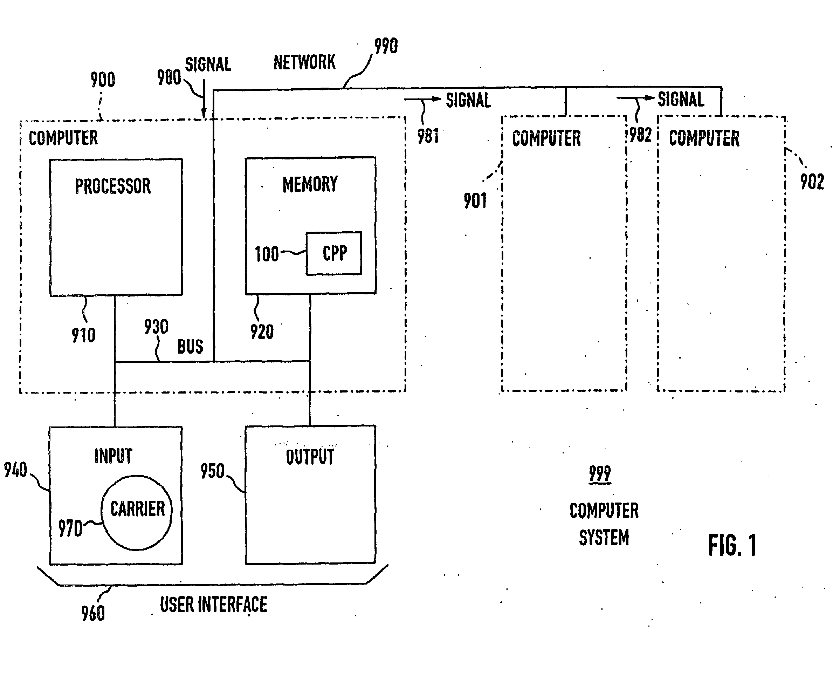

FIG. 1 illustrates a simplified block diagram of the inventive computer network system 999 having a plurality of computers 900, 901, 902 (or 90q, with q=0...Q-1 Q any number) .

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990".

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card. Computer and program are closely related. As used hereinafter, phrases, such as "the computer provides" and "the program provides", are convenient abbreviation to express actions by a computer that is controlled by a program.

Preferably, the present invention can be implemented by object-oriented programming techniques. Before explaining further details of the present invention, some further conventions are introduced. Terms are used as explained in the following:
- age: The attribute "age-of-a-person" is used in an example. A value "71 years" is presented to a user who later corrects the value to "72". In other words, "71" is the original attribute and "72" is the updated attribute.
- application: Also referred to as "model", an application collectively refers to any computer program that processes data attributes.
- class library: Repository of classes, i.e. a collection of classes, preferably, stored on the server computer. A single class instantiates to an object. It is possible to have a single class for instantiating multiple objects.
- command: Collectively used to describe controller actions (both to and from controller), such as "init", "create object", "create view", "create object", "instantiate".
- component: General term for browser, view, object, application, copy of object, library, collection, and controller
- content: Information about a person (e.g., age, name, address, phone number), about a manufacturing process, a business process, a thing (e.g., author, title, number of a book), etc. or any other information represented by an attribute.
- controller: Collectively referring to all means that (a) start and stops method steps according to the present invention; and that (b) transport data between the components.
- data attribute: Or "attribute": property of an object.
- format: Refers to the arrangement of data attributes, the same attribute (e.g., age-of-a-person) can be a string or an integer.
- generic: Checking is performed in the object without interaction with rules that are defined outside the object.
- HTML: stands collectively for any markup language such as HTML, WML, and XML
- identification (ID): Any alphanumeric value that identifies an attribute and its corresponding object. For convenience of explanation herein, the value "id0" identifies a single data attribute and its corresponding single object; the values "id1" and "id2" identify first and second data attributes and their corresponding first and second objects, respectively.
- JSP-collection: Repository of JSP-pages, stored preferably on the server computer.
- JSP-page: Java server page; collectively for an markup language page with a plurality of tag notations such as: (e.g., <%= obj.rawstring%>).
- object: The self-contained entity with both data and procedures to manipulate the data. In the context of the present invention, data is referred to as "attribute" and the procedures are: store, convert, check, and forward.
- rawstring: Data attribute in string format that is stored in the object.
- type of object: Qualitative definition:
1. corresponding to the process format (integer, string, floating point, date, time),
2. corresponding to the kind of content that is required from the user (name, age, address, postal code), or
3. corresponding to business application (cost center, inventory)
- view: Means to generate pages in markup language.
In the block diagrams, plain arrows indicate the transportation of data attributes between the components, preferably, under coordination by the controller; dashed arrows symbolize commands by the controller.

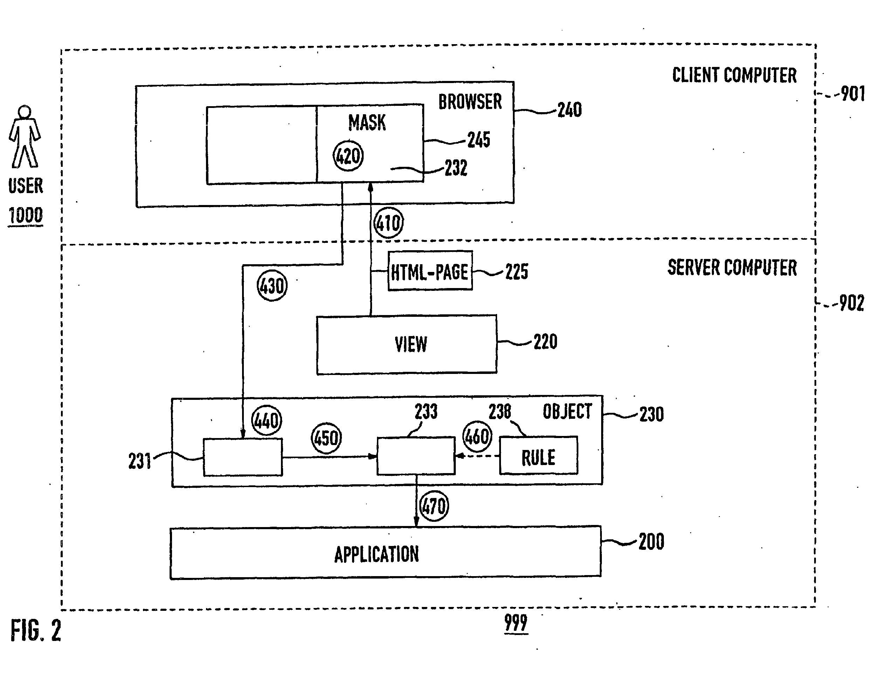

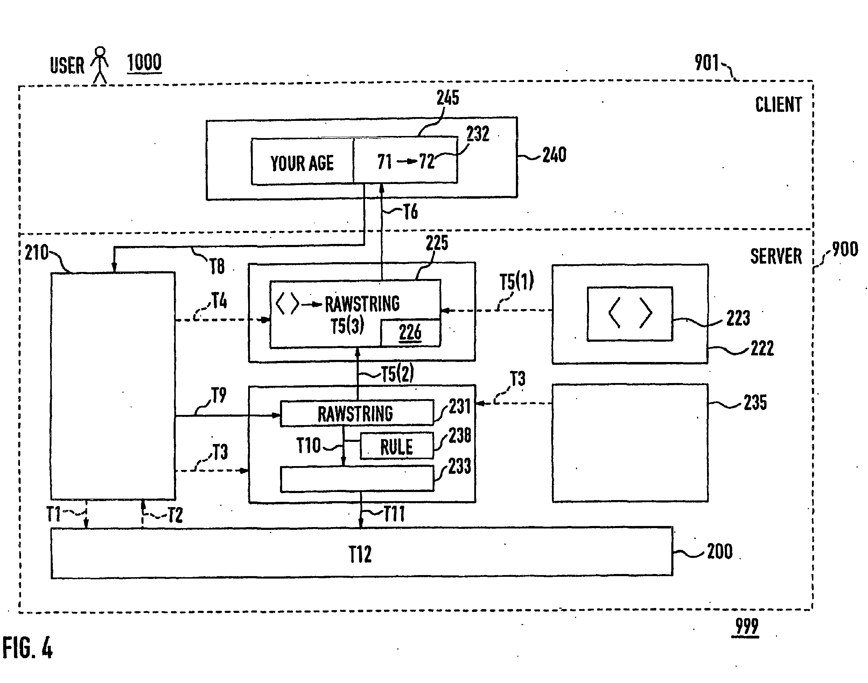

Persons of skill in the art are able to provide a controller without the need of further explanation herein. For convenience of explanation, some terms refer to actions that are performed by a component in cooperation with the controller or with any other means. These action terms (verbs) are:
- copy
- empty
- forward
- instantiate
- receive
- remove
- restore
- send
- store
- transfer
- dispatch
Each such action is well known in the art. For example, the phrase "the view sends an HTML-page to the browser" comprises - depending on how a person of skill in the art implements the action - identifying an address of the browser, coding the HTML-page according to TCP/IP and HTTP protocols, receiving the HTML-page by the client computer and making the HTML-page available to the browser.
In a first embodiment, the present invention is now explained in connection with FIGS. 2-8 for computer network system 999 with client computer 901 and a server computer 900. While FIGS. 2-3 illustrate the basic features of the invention; FIG. 4-8 illustrate preferred implementation details.

For convenience of explaining the first embodiment (FIGS. 2-8), the following assumptions are made:
- (i): Server computer 900 is fully available all the time, in other words, all components in server computer 900 are fully operational;
- (ii): checking is only performed in object 230;
- (iii): checking is complete in the meaning that an attribute has been checked according to a predefined number of rules and that successful checking makes the attribute ready for being processed by the application; and
- (iv): there is only a single object 230 and single content (e.g., object for "age-of-a-person" only).
FIG. 2 is a simplified block diagram of computer network system 999 with client computer 901 and server computer 900 for implementing the first embodiment. In computer network system 999, client computer 901 executes browser 240 to interact with user 1000, and server computer 900 executes application 200.

Further illustrated are: view 220 in server computer 900, markup language page 225 (HTML-page), data attributes (in transfer format 231/232, in process format 233), and predefined rule 238. For convenience, FIG. 2 shows method steps 410-470 by encircled reference numbers.

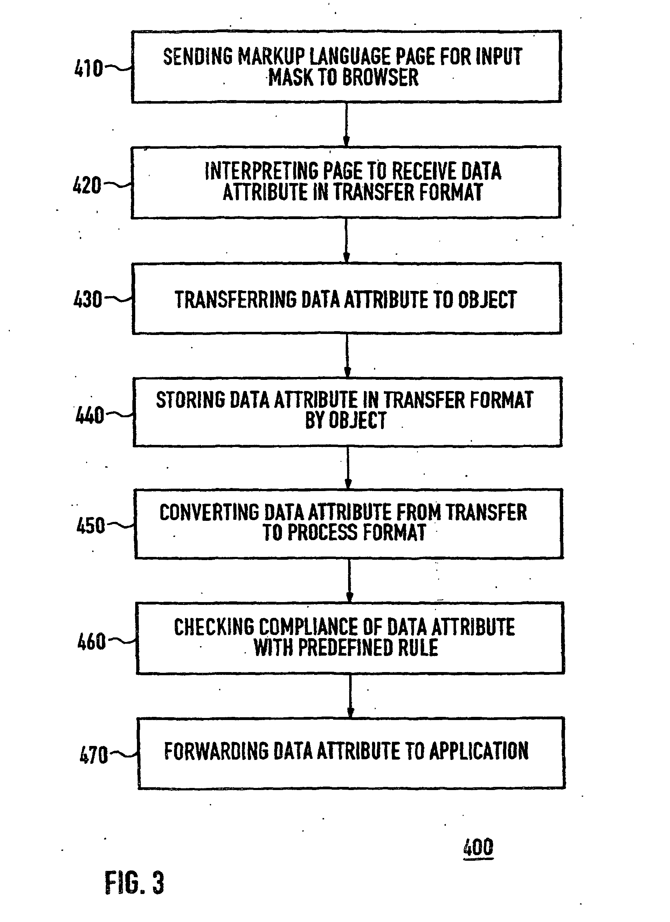

FIG. 3 is a simplified flow chart diagram of a method of the present invention according, conveniently illustrated for the first embodiment.

Generally, method 400 for capturing a data attribute of a predefined type from user 1000 is summarized by its main steps as follows:
- Step 410:: View 220 in server computer 900 sends markup language page 225 (HTML-page) for input mask 245 to browser 240;
- Step 420:: Browser 240 interprets HTML-page 225 to receive data attribute 232 from user 1000, (attribute is in transfer format, e.g. string);
- Step 430:: Browser 240 transfers data attribute 232 to object 230 on server computer 900 (for convenience, reference number changes to 231);
- Step 440:: Object 230 stores data attribute 231 in transfer format (e.g., string), the object having a type that corresponds to the type of data attribute (e.g., integer);
- Step 450:: Object 230 converts data attribute 231 to attribute 233 (from transfer to process format, e.g., string to integer);
- Step 460:: Object 230 checks the compliance of data attribute 233 (in process format) with predefined rule 238, and
- Step 470:: Object 230 forwards data attribute 233 (in process format, e.g., integer) to application 200. Step 470 is only executed in case of data compliance.
Capturing 400 is completed, application 200 is now ready to process data attribute 233 (process format). In case of non-compliance, steps 410-460 are repeated with modifications. Since attribute 231 is still stored (in transfer format), attribute 231 is, preferably, re-send to browser 240. User 1000 can now see attribute 231/232 again. During repetition, it is not required to send page 225 completely.

FIG. 4 is a simplified block diagram of computer network system 999 of FIG. 2 with more detail. Illustrated are:
• user 1000 who interacts with computer network system 999;
• client computer 901 with browser 240 and input mask 245 (illustrated by visual appearance on computer display 951, cf. FIG. 1); as well as
• server computer 900 with
   ◆ application 200,
   ◆ controller 210,
   ◆ view 220 (with markup language page 225, identification 226),
   ◆ JSP-collection 222 (with JSP-page 223),
   ◆ object 230 (with attributes 231/233, predefined rule 238), and
   ◆ class library 235.

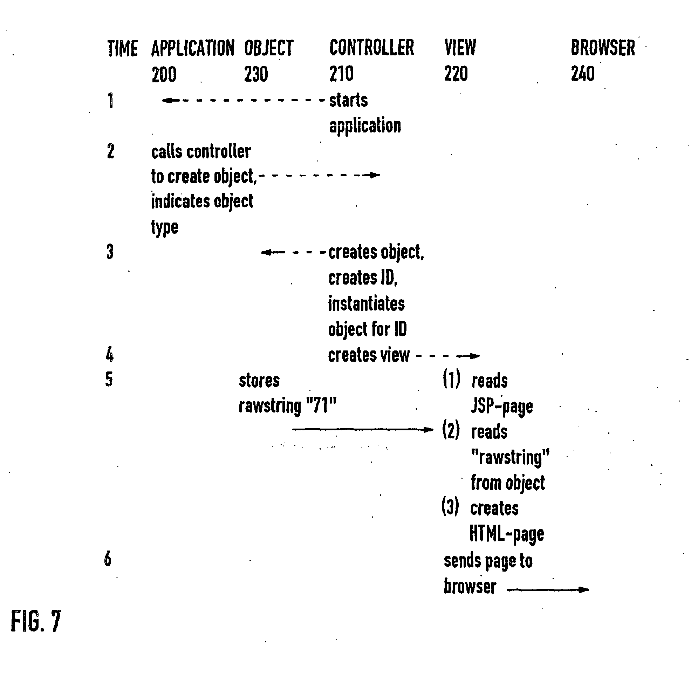

For convenience of further applications, data attributes have different reference numbers for different formats and different locations: attribute 231 in transfer format (e.g., string) as stored in object 230; attribute 232 in transfer format (e.g., string) as shown by browser 240, for convenience, the explanation does not distinguish whether attribute 232 originates from a user input or from HTML-page 225; attribute 233 in process format, (e.g., integer) stored in object 230. Consecutive time points as in FIGS. 7-8 are abbreviated by uppercase "T". Plain and dashed arrows distinguish attributes from controller commands, respectively.

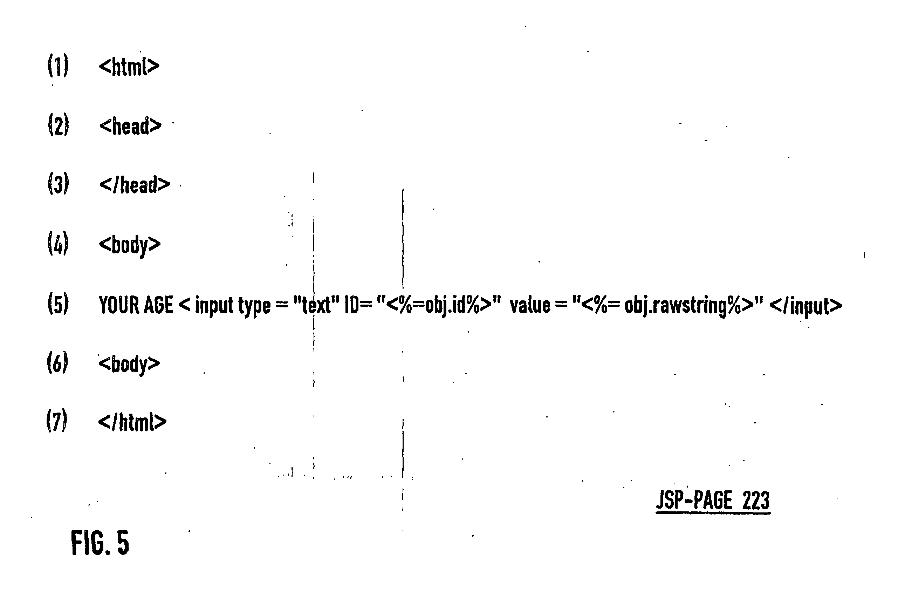

FIG. 5 is a simplified code listing of JSP-page 223. For convenience, code lines are numbered. For simplicity, details for the well-known header portion are not illustrated. As with every JSP-page, page 223 has a tag notation, cf. line (5), that is: <%=obj.rawstring%>)

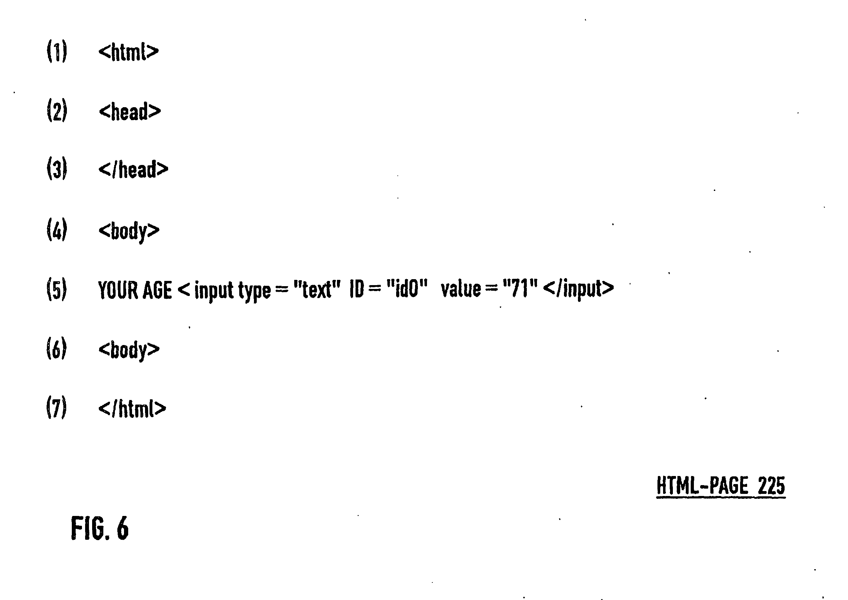

FIG. 6 is a simplified code listing of HTML-page 225. In difference to JSP-page 223, the tag notation on line (5) has been replaced by a value, here in the example, by "age-of-a-person".

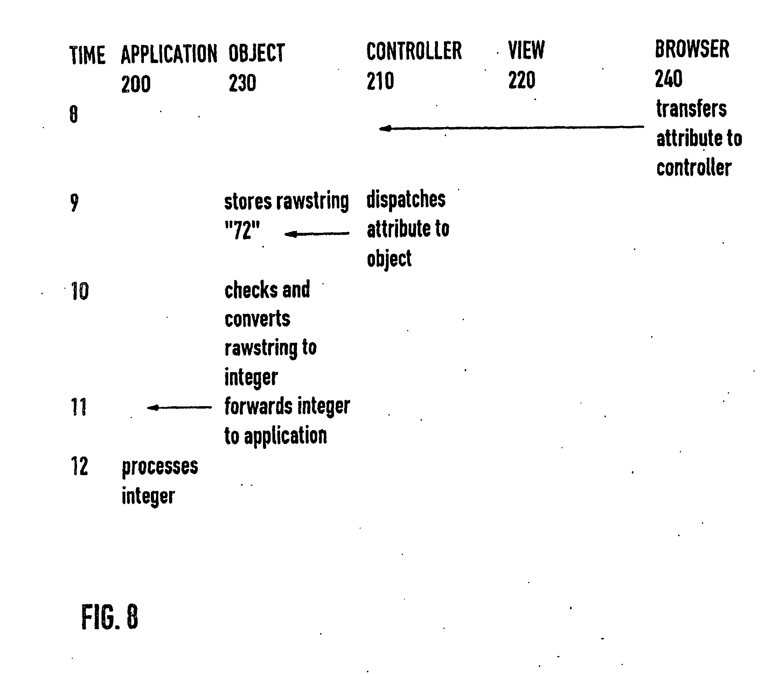

FIGS. 7-8 is a simplified action overview for the first embodiment for application 200, object 230, controller 210, view 220 and browser 240. Time points 1-12 are, preferably, consecutive time points; FIG. 7 indicates time 1-6 and FIG. 8 indicates time 7-12.

Referring to FIGS. 7-8, the first embodiment is now explained by example. In the figure, actions take place at consecutive time points. Although not necessary for the invention, some components such as object 230 and view 220 are created in the moment that they become required.
- Time 1:: Controller 210 starts application 200. For example, controller 210 issues a command "init".
- Time 2:: Application 200 calls controller 210 with the command "create object" (ID not known to application). Application 200 thereby indicates the type of object 230 that is required by application 200, in the example the type "integer".
- Time 3:: Controller 210 instantiates object 230 (from library 235) in a memory that is commonly accessable for both application 200 and object 230 (e.g., memory 920). Object 230 has ID=id0 and is of type "integer". In the example, the attribute has a predefined value, here "71".
- Time 4:: Controller 210 creates view 220, preferably, by issuing the command "create view".
- Time 5:: Controller 210 causes view 220 to do the following:
(1) View 220 reads predefined JSP-page 223 (cf. FIG. 5) from JSP-collection 222.
(2) View 220 reads attribute 231 in transfer format "rawstring" from object 230 (object 230 has attribute 231 called "rawstring"). In the example, the "rawstring" has the value "71". Having a predefined value (for presenting to user 1000) is convenient, but not required.
(3) View replaces the tag notation in JSP-page 223 by the attribute "rawstring" to create HTML (cf. FIG. 6, HTML-page 225).
- Time 6:: View 220 sends HTML-page 225 to browser 240 (in client computer 901).
- Time 7:: Browser 240 interprets HTML-page 225 to render input mask 245. Input mask 245 has a text field (shown left) and an input field (shown right). The text field shows "YOUR AGE"; and the input field shows "71". Thereby, mask 245 prompts user 1000 to modify the "71". The user changes to "72".
- Time 8:: Browser 240 transfers attribute "72" to controller 210 on server computer 900 (transfer response).
- Time 9:: Controller dispatches new attribute 233 (e.g., "72") to object 230 so that object 230 stores new attribute 231/232 (e.g., "72" replacing "71").
- Time 10:: Object 230 checks and converts rawstring "72" to integer (converting attribute 231 to attribute 233). Preferably, the existing programming techniques allows to combine checking and converting; a single command can do this; in case of non-integer, attempted converting would result in a error message. Checking follows predefined rule 238 (here in the example: "Does raw-string only comprises digits 0, 1, 2, 3,...,9 ?").
- Time 11:: Object 230 forwards data attribute 233 (e.g., integer) to application 200. Capturing is now completed.
- Time 12:: Application 200 processes attribute 233. It is now possible to remove object 230.

Having described the actions without considering identifications was convenient for explanation. Identification becomes mandatory when more than a single object is used. Persons of skill in the art can provide identification. When sending commands and data attributes, for example, the following identifications are conveniently used:
**•** at T2 and at T11, controller 210 identifies the part of the application where the call originates, and where data attribute 233 has to be forwarded to;
**•** at T6, identification 226 is part of page 225;
• at T8, the identification is part of the transfer response from browser 240; and
• at T9, controller 210 uses the identification to find object 230.

The assumptions for first embodiment are not applicable all the time. Server computer 900 might not be fully available all the time (i.e. time 1-12 as in FIG. 3); object 230 might need to use services external to object 230 for checking; checking might be incomplete; there are multiple data attributes 231/232/233 and multiple objects 230. For convenience of explanation, further embodiments are now explained where some of the above assumptions are modified(prime marker).

In a second embodiment, the first assumption is modified, but other assumptions remain valid, that is:
- (i'): Server computer 900 is unable to store object 230 all the time. During a predetermined period (cf. Time 6-8 in FIGS. 7-8), server computer 900 does not store object 230. Non-availability is known to controller 210 in advance;
- (ii): checking is performed in object 230;
- (iii): checking is complete;
- (iv): there is only a single object 230.

As explained in connection with the first embodiment, object 230 is needed at T5(2) by view 220 that reads old attribute 231 (i.e. rawstring "71"), and is needed again at T9 when controller 210 dispatches new attribute 233 (e.g., "72") to object 230. The following information is required for object 230 to resume operation at T9:
(a) type of object 230 (e.g., integer);
(b) identification 226 of object 230;
(c) rule 238 (e.g., "Does raw-string only comprises digits 0, 1, 2, 3,...,9 ?"); and
(d) the address (not shown) in application 200 where to forward attribute 233.
Information (a) (b) (c) (d) is also referred to as "state-information".

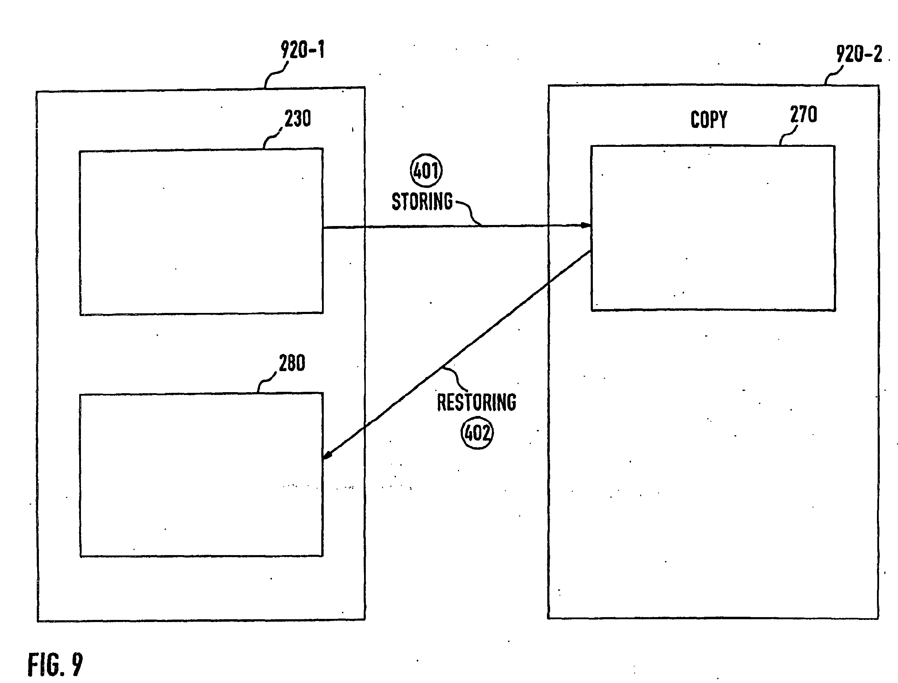

FIG. 9 is a simplified block diagram for memory of the server computer for implementing the second embodiment of the present invention with memory portion 920-1 that is temporarily unavailable and memory portion 920-2 is permanently available. Memory portion 920-1 stores object 230 (cf. FIG. 4) and - at a later time - stores restored object 280; memory portion 920-2 stores partial copy 270 of object 230.

Method 400 comprises the following further steps, both invoked by controller 210: 401 storing information (a) (b) (c) (d) in permanent memory portion 920-2; and 402 restoring object 230/280 in portion memory 902-1 using the information from memory portion 920-2. Conveniently, restoring uses class library 235 (cf. FIG. 4). Preferably, steps 401 and 402 are executed after time T5(2) and prior to time T9 (cf. PIGS. 7-8).

As used herein, "permanently" refers at least to the time between steps 401 and 402. Portion 920-2 can be implemented in a variety of ways, such as by a hard disk on server 900, by a separate database server, or even by hidden input fields in page 225.

It is an advantage that restoring can be delayed until browser 240 has transferred attribute 232 to server computer 900 (cf. time T8). This saves expensive usage of memory portion 920-1.

Persons of skill in the art are able to extend the store-restore scheme to other components. Likewise, in case of non-availability of controller 210 or of application 200, identification has to be stored as well.

As explained, temporarily storing state-information requires further method steps. However, the economic benefits of the second embodiment outplace the additional efforts. In the practice of modern business-via-internet applications, a single server computer cooperates with thousands of client computers with thousands of users. For each client, a separate object is created (even more when disregarding assumption (iv)). Memory portion 920-1 of computer 900 is regarded as expensive (semiconductor memory, RAM, requires address space); memory portion 920-2 is cheaper. The second embodiment optimizes costs by distributing the memory load over "cheap" and "expensive" memory.

For a third embodiment, assumptions (i) and (i') of the first and second embodiments are valid. Assumptions (iii) (checking complete) and (iv) (single object) are valid as well. Different from the first and second embodiments is that (ii') checking is performed outside object 230.

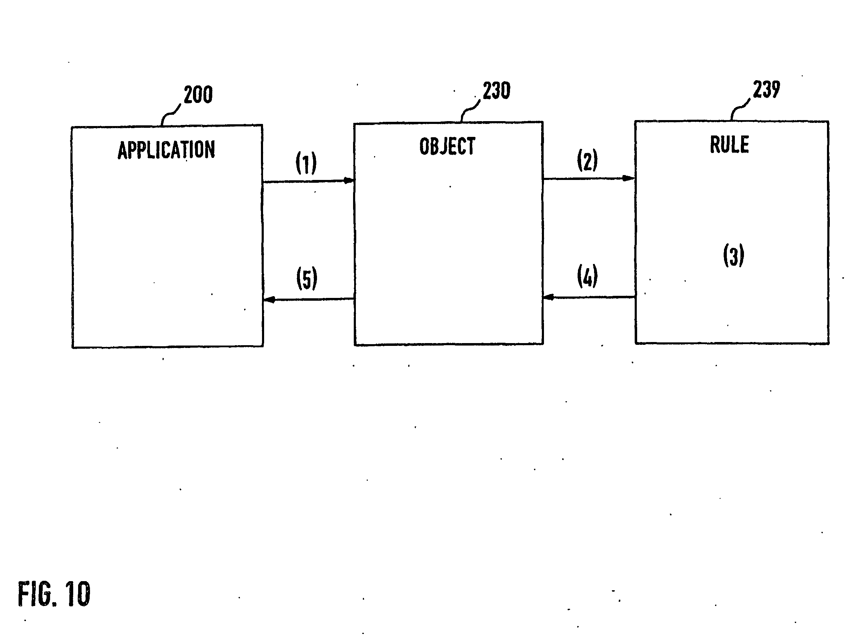

FIG. 10 is a simplified diagram of object 230, rule 239, and application 200 according to the third embodiment. Rule 239 is similar to rule 238 (cf. FIG. 4) with the exception that rule 239 is external to object 230. optionally, rule 239 is part of application 200. The format in that rule 239 accesses data attribute 231/233 does not matter: depending on the implementation, rule 239 accesses the transfer format (231/232)or the process format (233) or both formats. For example, the scenario is as follows for a data range check:
(1) application 200 queries object 230 for validity/non-validity of attribute 232/233 (cf. FIG. 4);
(2) object 230 calls rule 239 and makes attribute 231/233 available to rule 239 (i.e. integer);
(3) rule 239 checks a range (e.g., integer for age-of-a-person larger than or equal to 0 and smaller than or equal to 130);
(4) rule 239 indicates range compliance to object 230;
(5) object 230 forwards range compliance to application 200.

Many variations of this scheme are possible. Performing a check by external role 239 alone is convenient, but not necessary; persons of skill in the art can perform both internal checking ("generic", rule 238, cf. FIG. 4) and external checking ("non-generic", rule 239) in any order.

For example, application 200, object 230 (internal rule 238, cf. FIG. 4) and external rule 239 cooperate as follows:
(1) application 200 queries object 230 for validity/non-validity of attribute 231 (cf. FIG. 4); for example, validity is defined if attribute 231 can be converted into process format "integer";
(2) object 230 performs internal check with rule 238 and indicates validity;
(3) application 200 requests a further check for data range at object 230;
(4) object 230 calls rule 239 and makes attribute 233 available to rule 239 (i.e. integer);
(5) rule 239 checks the range (e.g., integer larger than or equal to 0 and smaller than or equal to 130);
(6) rule 239 indicates range compliance to object 230;
(7) object 230 forwards range compliance to application 200; and
(8) object 230 forwards attribute 233.

Many variations of this scheme are possible as well. Without the need of further explanation herein, persons of skill in the art can adapt the scheme for non-compliance.

As mentioned in the background section, in practice, the input mask invites the user to input a large number of data attributes such as name, address, age, etc. Assumption (iv') is now modified. In a forth embodiment of the present invention, there are multiple data attributes with corresponding multiple objects.

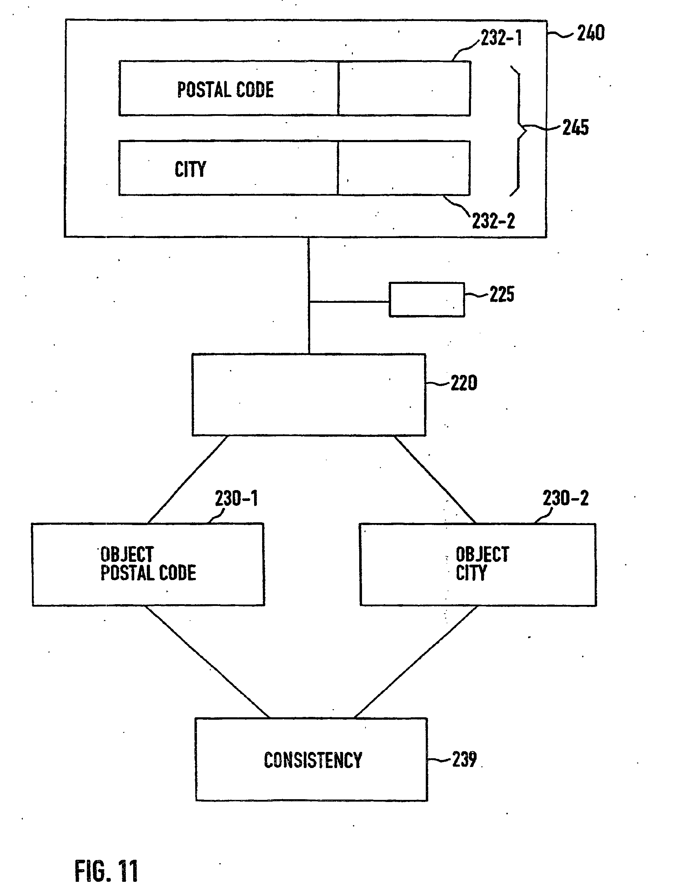

FIG. 11 is a simplified diagram of first and second data attributes 232-1, 232-2 with first and second objects 230-1, 230-2, respectively, in the fourth embodiment. Preferably, HTML-page 223 (provided by view 220) considers both objects. In the example, input mask 245 in browser 240 has text fields for "POSTAL CODE" and "CITY" (content) and has input fields for attributes 232-1 and 232-2, respectively. Objects 230-1 and 230-2 are corresponding to the content. Preferably, objects 230-1 and 230-2 use external rule 239 to check consistency of postal code and city. In order to keep the explanation simple, FIG. 11 does not illustrate computers 900 and 901.

As mentioned above, method 400 (FIG. 3) is a method capturing a data attribute of a predefined type. Processing attribute 233 by application 200 follows. In case of multiple attributes (cf. FIG. 11), capturing (method 400) and processing can be combined in a convenient order:
(1) Capturing first attribute, processing first attribute, capturing second attribute, processing second attribute.
(2) Capturing first attribute, capturing second attribute, processing first attribute, processing second attribute.

It is also possible to define the order for selected method steps (method 400 for all embodiments). This is possible because the object are independent from each other.

Persons of skill in the art are able to combine the above embodiments without the need of further explanation herein.

### List of References

- 100: computer program product
- 1000: user
- 200: application
- 210: controller
- 220: view
- 222: JSP-collection
- 223: JSP-page
- 225: markup language code HTML-page (code)
- 226: identification (ID)
- 230, 230-1, 230-2: object
- 231, 233, 233-1, 233-2: data attribute (transfer format)
- 232: data attribute (process format)
- 235: class library
- 238: predefined rule
- 240: browser
- 245: input mask
- 270: partial copy of object
- 280: restored object
- 400: method
- 401-402, 410-470: method steps
- 900, 901: computer
- 910: processor
- 920: memory (general)
- 920-1: memory (temporarily unavailable)
- 920-2: memory (permanent)
- 930: bus
- 940: input device
- 950: output device
- 960: user interface
- 980: signal
- 990: network
- 999: computer network system
- 999: system

## Claims

1. A method (400) for capturing a data attribute (231, 232, 233) of a predefined type from a user of a client computer (900) to an application (200) on a server computer (900),
the method comprising the following steps:
sending (410) a markup language page (225) by a view (220) in the server computer (900) to a browser (240) in the client computer (901) for displaying an input mask (245);
interpreting (420) the page (225) by the browser (240) to receive the data attribute (232) from the user (1000), the attribute being in a transfer format;
transferring (430) the data attribute (232/231) to an object (230) on the server computer (900), the object having a type that corresponds to the type of the attribute;
storing (440) the data attribute (231) by the object (230) in transfer format;
converting (450) the data attribute (231) from the transfer format to a process format by the object (230);
checking (460) the compliance of the data attribute (233) with a predefined rule (238, 239) by the object (230); and
forwarding (470) the data attribute (233) in the process format by the object (230) to the application (200);
**characterised in that** the method further comprises the steps of storing (401) state information in permanent memory (920-2) and restoring (402) the object by using the state information.

2. The method of claim 1, wherein the transfer format is a string format.

3. The method of claim 1, wherein in the checking step (460), the predefined rule (238) is internal to the object (230).

4. The method of claim 1 wherein in the checking step (460), the predefined rule (239) is external to the object (230).

5. The method of claim 1, wherein restoring (402) is delayed until transferring (430).

6. The method of claim 1, wherein storing (401) state information in permanent memory (920-2) is performed by storing in hidden input fields in the page.

7. A computer system (999) with a client computer (901) and a server computer (900) for implementing the method of claims 1 - 6.

8. A computer program product having instructions that cause a processor to execute the steps of any of method 1 - 6.

## Patentansprüche

1. Verfahren (400) zum Erfassen eines Datenattributs (231, 232, 233) einer vorbestimmten Art von einem Benutzer eines Klientencomputers (900) an einer
Anwendung (200) auf einem Servercomputer (900),
wobei das Verfahren die folgenden Schritte umfaßt:
Senden (410) einer Markup- bzw. Auszeichnungssprachenseite (225) durch eine Ansicht (220) in dem Servercomputer (900) zu einem Browser (240) in dem Klientencomputer (901) zum Anzeigen einer Eingabemaske (245);
Interpretieren (420) der Seite (225) durch den Browser (240), um das Datenattribut (232) von dem Benutzer (1000) zu empfangen, wobei das Attribut in einem Transfer- bzw. Übertragungsformat vorliegt;
Transverieren bzw. Übertragen (430) des Datenattributs (232/231) an ein Objekt bzw. Gegenstand (230) auf dem Servercomputer (900), wobei das Objekt bzw. der Gegenstand eine Art aufweist, welche mit der Art des Attributs übereinstimmt bzw. diesem entspricht;
Speichern (440) des Datenattributs (231) durch das Objekt (230) im Übertragungsformat;
Konvertieren (450) des Datenattributs (231) von dem Übertragungsformat zu einem Prozeß- bzw. Bearbeitungsformat durch das Objekt (230);
Überprüfen (460) der Übereinstimmung bzw. Konformität des Datenattributs (233) mit einer vordefinierten Regel (238, 239) durch das Objekt (230); und
Übermitteln bzw. Weiterleiten (470) des Datenattributs (233) in dem Prozeßformat durch das Objekt (230) zu der Anwendung (200);
**dadurch gekennzeichnet**, das Verfahren weiters die Schritte eines Speicherns (401) von Zustandsinformationen in einem permanenten bzw. Permanentspeicher (920-2) und eines Wiederherstellens (402) des Objekts durch Verwenden der Zustandsinformation umfaßt.

2. Verfahren nach Anspruch 1, wobei das Übertragungsformat ein Stringformat ist.

3. Verfahren nach Anspruch 1, wobei in dem Überprüfungsschritt (460) die vorbestimmte Regel (238) dem Objekt (230) innenliegend bzw. innewohnend ist.

4. Verfahren nach Anspruch 1, wobei in dem Überprüfungsschritt (460) die vorbestimmte Regel (239) außerhalb des Objekts (230) ist.

5. Verfahren nach Anspruch 1, wobei ein Wiederherstellen (402) bis zu einem Übertragen (430) verzögert wird.

6. Verfahren nach Anspruch 1, wobei ein Speichern (401) von Zustandsinformation in dem Permanentspeicher (920-2) durch ein Speichern in versteckten Eingabefeldern in der Seite ausgeführt wird.

7. Computersystem (999) mit einem Klientencomputer (901) und einem Servercomputer (900) zum Implementieren des Verfahrens nach Ansprüchen 1 - 6.

8. Computerprogrammprodukt, das Instruktionen aufweist, welche einen Prozessor veranlassen, die Schritte von irgendeinem Verfahren 1 - 6 auszuführen.

## Revendications

1. La présente invention concerne un procédé (400) de capture d'un attribut de données (231, 232, 233) prédéfini d'un utilisateur d'un ordinateur client (900) vers une application (200) sur un ordinateur serveur (900).
Le procédé comprend les étapes suivantes :
l'envoi (410) d'une page de langage de balisage (225) via un affichage (220) sur l'ordinateur serveur (900) vers un navigateur (240) sur l'ordinateur client (901) pour afficher un masque de saisie (245) ;
l'interprétation (420) de la page (225) par le navigateur (240) pour recevoir l'attribut de données (232) de l'utilisateur (1000), l'attribut étant en format transfert ;
le transfert (430) de l'attribut de données (232/231) vers un objet (230) sur l'ordinateur serveur (900), l'objet ayant un type qui correspond au type de l'attribut ;
le stockage (440) de l'attribut de données (231) par l'objet (230) en format transfert ;
la conversion (450) de l'attribut de données (231) de format transfert en format de traitement par l'objet (230) ;
la vérification (460) de la conformité de l'attribut de données (233) à une règle prédéfinie (238, 239) par l'objet (230) ; et
le renvoi (470) de l'attribut de données (233) en format de traitement par l'objet (230) vers l'application (200) ;
**caractérisé en ce que** le procédé comprend en outre les étapes de stockage (401) des informations d'état dans la mémoire permanente (920-2) et le re-stockage (402) de l'objet en.utilisant les informations d'état.

2. Le procédé de la revendication 1, selon lequel le format de transfert est en format de chaîne.

3. Le procédé de la revendication 1, selon lequel l'étape de vérification (460) et la règle prédéfinie (238) sont internes à l'objet (230).

4. Le procédé de la revendication 1, selon lequel l'étape de vérification (460) et la règle prédéfinie (239) sont externes à l'objet (230).

5. Le procédé de la revendication 1, selon lequel le rétablissement (402) est retardé jusqu'au transfert (430).

6. Le procédé de la revendication 1, selon lequel le stockage (401) des informations d'état dans la mémoire permanente (920-2) est effectué en stockant des champs de saisie de données cachés dans la page.

7. Un système informatique (999) constitué d'un ordinateur client (901) et d'un ordinateur serveur (900) pour la mise en oeuvre du procédé des revendications 1 à 6.

8. Un programme informatique composé d'une série d'instructions ordonnant au processeur d'exécuter les étapes d'un quelconque des procédés 1 à 6.
